# EUROPÄISCHE PATENTSCHRIFT

(11) **EP 1 978 304 B1**
(45) Veröffentlichungstag und Bekanntmachung des Hinweises auf die Patenterteilung: **04.07.2012**
(21) Anmeldenummer: 08101983.8
(22) Anmeldetag: 26.02.2008
(51) Int. Cl.: F23L 11/00, F16K 11/052, F16K 31/52, F15B 15/06

(54) **Absperrsystem für große Leitungsquerschnitte mit einer Schwenkklappe**
Blocking system for large sections of piping with a swinging flap
Système de verrouillage pour sections transversales de conduites de grande taille à l'aide d'un clapet basculant

(30) Priorität: 05.04.2007 DE 102007016554
(43) Veröffentlichungstag der Anmeldung: 08.10.2008
(73) Patentinhaber: Janich GmbH & Co. KG, 96528 Rauenstein (DE)
(72) Erfinder: Janich, Hans-Jürgen, 96271 Grub am Forst (DE); Krüger, Matthias, 96528 Effelder-Rauenstein (DE)
(74) Vertreter: Tetzner, Michael

(56) Entgegenhaltungen:
- EP-A2- 0 707 176
- DE-U1- 9 304 957
- FR-A1- 2 633 365
- US-A- 3 720 138

## Beschreibung

Die Erfindung betrifft ein Absperrsystem für große Leitungsquerschnitte mit einer Schwenkklappe, die um eine Schwenkachse mittels einer Antriebseinrichtung zwischen zwei Endstellungen hin und her schwenkbar ist, wobei die Antriebseinrichtung eine Antriebswelle aufweist, die über ein Kniehebelsystem mit der Schwenkklappe in Verbindung steht und wenigstens ein drehfest mit der Antriebswelle verbundener Hebelarm vorgesehen ist, der mit wenigstens einem Betätigungszylinder zum Drehen der Antriebswelle in Wirkverbindung steht.

Absperrsysteme dieser Art werden insbesondere in Gasturbinenanlagen und Rauchgasreinigungsanlagen eingesetzt. Um einen gasdichten Abschluss zu erreichen, muss der großformatige Flügel in Absperrstellung mit großem Druck an die ortsfeste Dichtfläche angepresst werden. Außerdem sind in den Endlagen auch hohe Differenzdrücke zu bewältigen. Für das Schwenken der Schwenkklappe hat sich der Kniehebelantrieb als besonders geeignet herausgestellt, weil sich in den jeweiligen Endstellungen der Schwenkklappe durch die Wirkung des Kniehebels mit relativ geringen Antriebs-Drehmomenten hohe Schließkräfte erzeugen lassen.

Bei Verwendung eines Kniehebels ist es vorteilhaft, die Antriebswelle möglichst nahe der Mitte der Schwenkklappe anzuordnen, weil dadurch die Wirkung des Kniehebels in den Endlagen am besten zur Entfaltung kommt und die Schließkraft am Umfang der Schwenkklappe annähernd gleich ist. Dies erfordert aber bei einer 90°-Schwenkbewegung der Schwenkklappe, je nach räumlichen Gegebenheiten, einen Schwenkwinkel der Antriebswelle von 160° bis 200.

Bei der Verwendung von Elektroantrieben ist ein Stellwinkel von 180° einfach zu realisieren. Jedoch sind solche Antriebe bei den für große Absperreinrichtungen erforderlichen Antriebsmomenten sehr teuer in der Anschaffung und aufgrund ihrer hohen Untersetzung nur für lange Stellzeiten einsetzbar. Außerdem können Elektroantriebe für verschiedene Einsatzfälle nicht verwendet werden.

Mit Hydraulikantrieben, welche über einen Zylinder und einen Hebel den Schwenkvorgang bewirken, sind die erforderlichen Stellwinkel von 180° jedoch nicht realisierbar. Es wurden daher schon Doppelkolbenantriebe mit Zahnstangen verwendet.

In der DE 41 35 182 A1 und der DE 40 33 663 A1 kommen Doppelkolbenantriebe mit Hebeln und entsprechender Ventilsteuerung zur Anwendung. Diese sind jedoch störanfällig, teuer in der Anschaffung und erfordern eine häufige Wartung.

Um diese Probleme zu lösen, wurde in der EP 0 707 176 A2 eine Spannhebelklappe vorgeschlagen, bei der die Drehachse der Antriebswelle so weit in Richtung Schwenkachse der Schwenkklappe verschoben ist, dass sich ein Drehwinkel von ca. 150° ergibt und somit noch mit einfachen Hydraulikantrieben gearbeitet werden kann. Diese Ausführung führt zwar zur einer Verringerung des Drehwinkels der Antriebswelle, hat jedoch gleichzeitig eine Verringerung der an der Schwenkklappe wirkenden Schließkraft zur Folge. Dies kann nur durch eine Erhöhung des Antriebsmomentes ausgeglichen werden, woraus jedoch auch stärkere Antriebe und höhere Biegemomente an der Welle und den Hebeln resultieren. Gerade dies ist jedoch bei den hohen Betriebstemperaturen von über 600°C und den hohen Differenzdrücken an der Schwenkklappe problematisch.

Zum Stand der Technik gehören schließlich Antriebseinrichtungen (FR 2 633 365 A1 und US 3 720 138 A), die eine um ein Schwenklager drehbeweglich befestigte Schwinge enthalten, die mit einem Betätigungszylinder zum Schwenken der Schwinge in Verbindung steht, wobei zwischen der Schwinge und einem mit der Antriebswelle verbundenen Hebelarm ein Übertragungselement vorgesehen ist, um die Schwenkbewegung der Schwinge auf die Antriebswelle zu übertragen.

Der Erfindung liegt die Aufgabe zugrunde, unter Vermeidung der geschilderten Nachteile ein Absperrsystem zu schaffen, das mit einem einfachen, störungsfreien und betriebssicheren Hydraulikantrieb Stellwinkel von über 160° realisieren kann.

Erfindungsgemäß wird diese Aufgabe durch die Merkmale des Anspruches 1 gelöst.

Weitere Ausgestaltung der Erfindung sind Gegenstand der Unteransprüche.

Die Antriebseinrichtung ist zweckmäßigerweise so ausgebildet, dass die Drehbewegung der Antriebswelle zwischen den beiden Endstellungen der Klappe wenigstens 160°, insbesondere zwischen 160° und 180° beträgt. Dabei führt die Schwenkklappe zwischen den beiden Endstellungen eine Schwenkbewegung von etwa 90° aus.

Gemäß einer weiteren Ausgestaltung der Erfindung ist die Schwinge mit ihrem einen Ende drehbeweglich um das Schwenklager gelagert und steht mit ihrem anderen Ende über das Übertragungselement mit dem Hebelarm in Verbindung, wobei der Betätigungszylinder in einem Mittelbereich der Schwinge angekoppelt ist.

Zweckmäßigerweise beträgt der Abstand der Schwenkachse der Schwenkklappe und der Drehachse der Antriebswelle 0.3 bis 0.7, vorzugsweise 0.4 bis 0.6 der Breite der Schwenkklappe. Auf diese Art und Weise kann der Kniehebel in der Mitte der Schwenkklappe angreifen, wodurch eine gleichmäßige Verteilung der Dichtkraft auf den Umfang der Schwenkklappe gewährleistet ist.

Gemäß einem ersten Ausführungsbeispiel wird das Übertragungselement durch eine Gelenkstange gebildet.

Die Schwinge kann einen Anschlag enthalten, der die Schwenkbewegung der Schwinge begrenzt und bei einer weiteren Hubbewegung des Betätigungszylinders eine Verschiebung der Schwinge und dadurch eine weitere Vergrößerung der Drehbewegung der Antriebswelle bewirkt.

Gemäß einem weiteren Ausführungsbeispiel ist das Übertragungselement als zweiter Betätigungszylinder ausgebildet, wodurch der Drehbereich der Antriebswelle ebenfalls vergrößert werden kann.

Weitere Vorteile und Ausgestaltungen der Erfindung werden im Folgenden anhand der Beschreibung einiger in der Zeichnung veranschaulichter Ausführungsbeispiele näher erläutert.

In der Zeichnung zeigen
- Fig. 1: eine teilweise geschnittene, dreidimensionale Ansicht eines Absperrsystems in einer ersten Endstellung der Schwenkklappe,
- Fig. 2: eine teilweise geschnittene, dreidimensionale Ansicht des Absperrsystems in einer zweiten Endstellung der Schwenkklappe,
- Fig. 3: eine dreidimensionale Darstellung des Absperrsystems mit einer Antriebseinrichtung, wobei sich die Schwenkklappe in einer ersten Endstellung befindet,
- Fig. 4: eine dreidimensionale Darstellung des Absperrsystems mit der Antriebseinrichtung gemäß Fig.3, wobei sich die Schwenkklappe in einer zweiten Endstellung befindet,
- Fig. 5: eine Seitenansicht der Antriebseinrichtung in der Stellung gemäß Fig. 4,
- Fig. 6a bis 6c: Seitenansichten einer erfindungsgemäßen Antriebseinrichtung in verschiedenen Stellungen,
- Fig. 7: eine dreidimensionale Darstellung des Absperrsystems mit einer Variante der Antriebseinrichtung, wobei sich die Schwenkklappe in einer ersten Endstellung befindet,
- Fig. 8: eine dreidimensionale Darstellung des Absperrsystems mit der Antriebseinrichtung gemäß Fig.7, wobei sich die Schwenkklappe in einer Mittelstellung befindet,
- Fig. 9: eine dreidimensionale Darstellung des Absperrsystems mit der Antriebseinrichtung gemäß Fig.7, wobei sich die Schwenkklappe in einer zweiten Endstellung befindet,

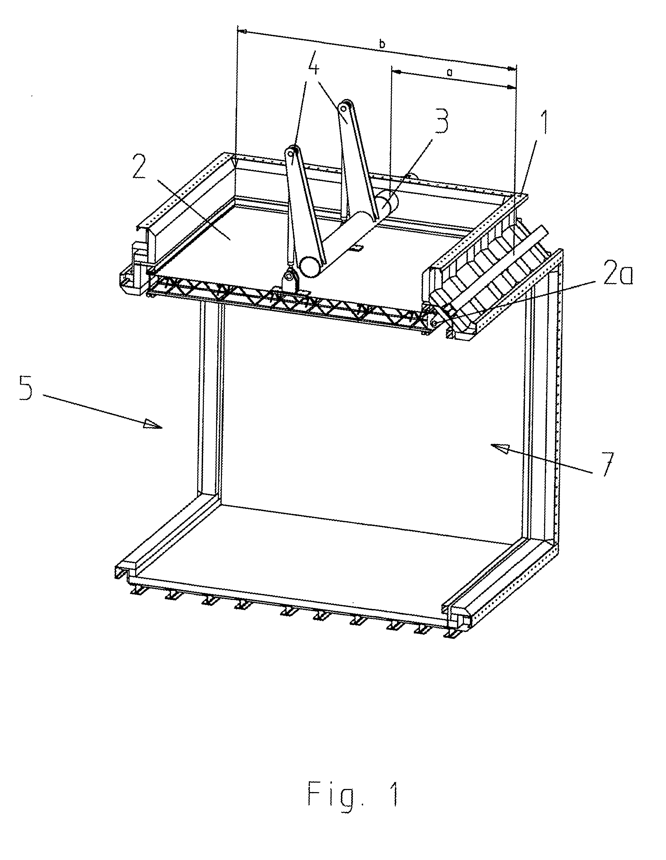

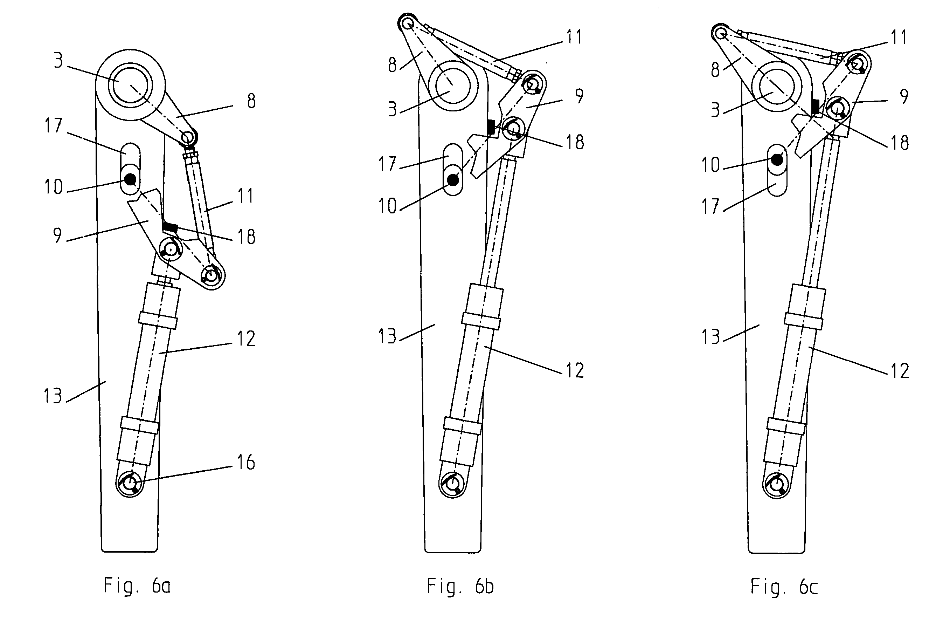

Die Fig. 1 bis 5 sowie 7 bis 9 zeigen den grundsätzlichen Aufbau des Absperrsystemes und seiner Antriebseinrichtung. Die Fig. 6a bis 6c veranschaulichen wesentliche Einzelheiten der Erfindung.

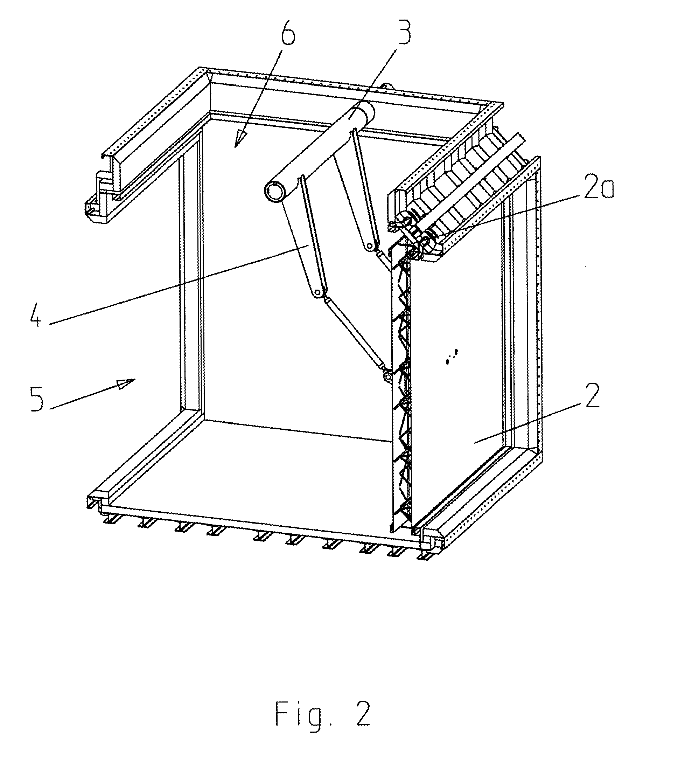

Das in den Fig. 1 und Fig. 2 dargestellte Absperrsystem enthält eine Schwenkklappe 2, die in einem Gehäuse 1 um eine Schwenkachse 2a zwischen einer in Fig. 1 gezeigten ersten Endstellung und einer in Fig. 2 dargestellten zweiten Endstellung hin und her schwenkbar ist.

Die Schwenkbewegung erfolgt über eine Antriebseinrichtung, die eine Antriebswelle 3 aufweist, die über ein Kniehebelsystem 4 mit der Schwenkklappe 2 in Verbindung steht. Das Gehäuse 1 weist drei Öffnungen 5, 6 und 7 auf, wobei jeweils eine der beiden Öffnungen 6, 7 durch die Schwenkklappe 2 verschließbar ist.

Die Schwenkklappe 2 kann beispielsweise ein Gitterwerk gemäß der DE 44 46 395 A1 aufweisen, das in den beiden Endstellungen mit geeignet ausgebildeten Dichtungselementen zusammenwirkt. Die Dichtungselemente können dabei insbesondere gemäß der EP 092 899 B1 ausgebildet werden.

Wenn in der vorliegenden Beschreibung von einem Absperrsystem für große Leitungsquerschnitte die Rede ist, so sind damit Leitungsquerschnitte von mehr als 15m², insbesondere mehr als 20m², bzw. mehr als 40m², gemeint.

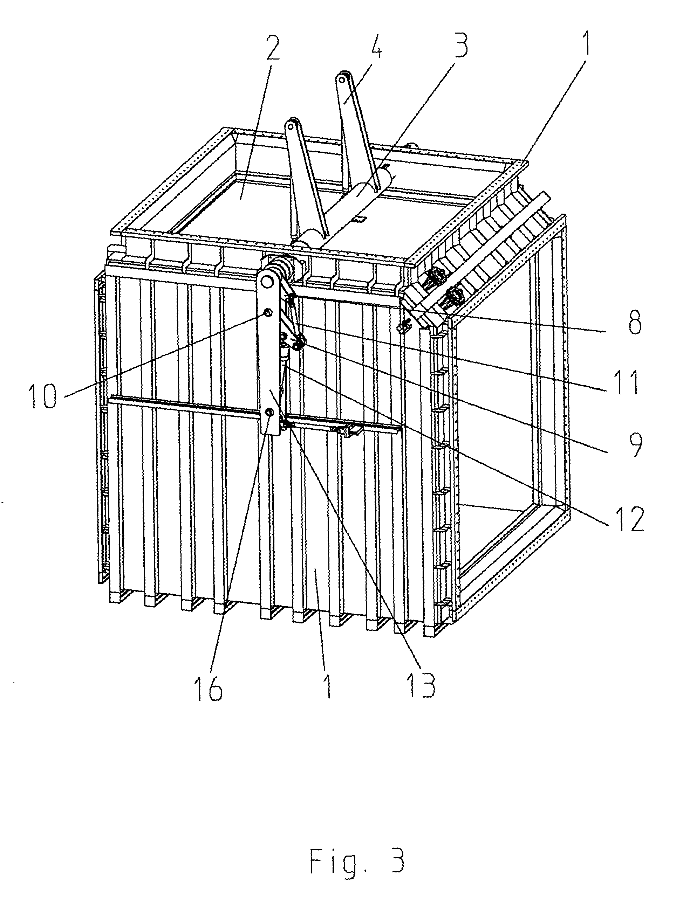

Im Folgenden wird anhand der Fig. 3 bis Fig. 5 der grundsätzliche Aufbau eines Ausführungsbeispieles der Antriebseinrichtung näher beschrieben.

Mit der Antriebswelle 3 ist ein Hebelarm 8 drehfest verbunden. Ferner ist eine Schwinge 9 vorgesehen, die mit ihrem einen Ende drehbeweglich um ein ortsfestes Schwenklager 10 gelagert ist und mit ihrem anderen Ende über ein als Gelenkstange ausgebildetes Übertragungselement 11 mit dem Hebelarm 8 in Verbindung steht. Ein Betätigungszylinder 12 ist in einem Mittelbereich der Schwinge 9 angekoppelt.

Sowohl das Schwenklager 10 der Schwinge 9 als auch das Gegenlager 16 des Betätigungszylinders 12 sind im Bereich einer Konsole 13 vorgesehen, die mit ihrem einen Ende drehbeweglich an der Antriebswelle 3 gehaltert ist und sich mit ihrem anderen Ende über eine Gelenkstange oder einen Stoßdämpfer 14 am Gehäuse 1 abstützt. Es ist aber auch denkbar, einen Kraftspeicher, insbesondere eine Feder, vorzusehen, welche in der Endlage vorgespannt wird und so beispielsweise durch Wärmedehnungen bedingte Lageänderungen ausgleicht.

Die Schwinge 9 und der Betätigungszylinder 12 können auch direkt am Gehäuse abgestützt werden. Das Vorsehen der Konsole 13 hat jedoch den Vorteil, dass die Schwenkklappe 2 bei der Montage in ihren Endstellungen auf einfache Art und Weise justiert werden kann.

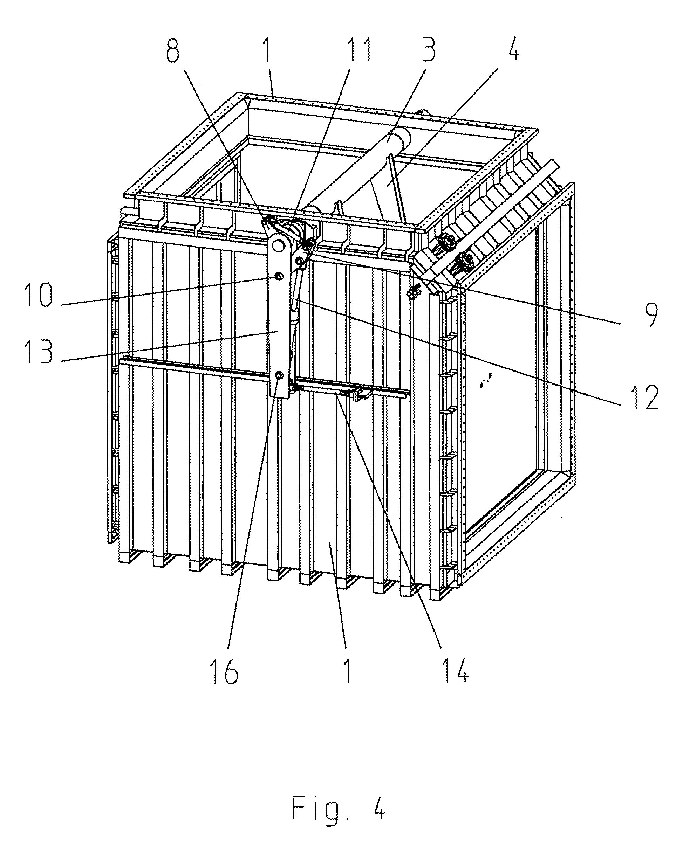

In den Fig. 3 und Fig. 4 sind die beiden Extremstellungen der Antriebseinrichtung dargestellt.

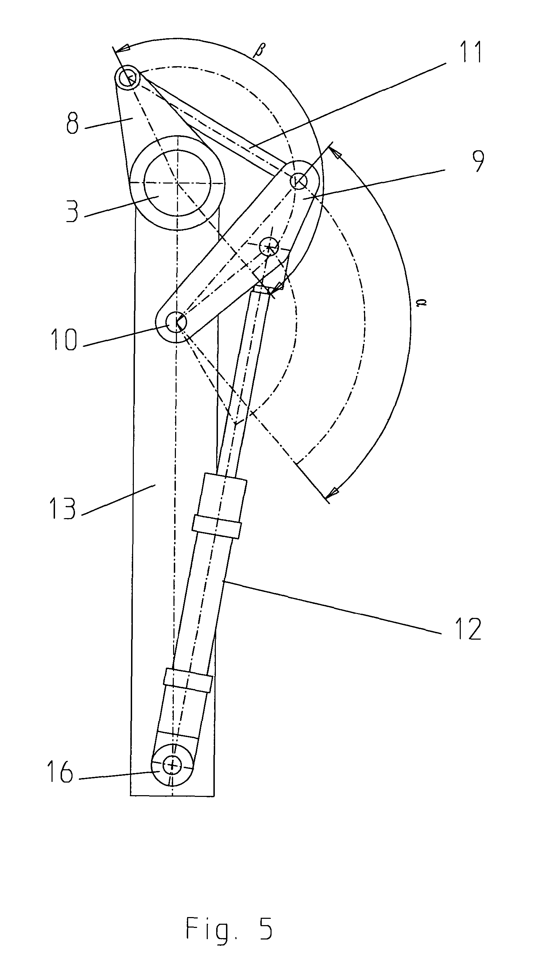

Aus Fig. 5 wird ersichtlich, dass der Betätigungszylinder 12 im dargestellten Ausführungsbeispiel eine Schwenkbewegung der Schwinge 9 um das Schwenklager 10 mit einem Winkel α von etwa 100° ermöglicht. Über die Kopplung der Schwinge 9 mit dem Hebelarm 8 über das Übertragungselement 11 ergibt sich dann für den Hebelarm 8 und somit für die Antriebswelle 3 ein Schwenkbereich β von über 160°. Im dargestellten Ausführungsbeispiel beträgt der Schwenkbereich etwa 166°. Dieses Ausführungsbeispiel ist speziell für Schwenkbewegungen im Bereich von 160° bis kleiner 180° geeignet. Es benötigt lediglich einen einzelnen Hydraulikzylinder und gewährleistet dadurch einen einfachen, steuerungsfreien und betriebssicheren Hydraulikantrieb.

In den Fig. 6a bis 6c ist die erfindungsgemäße Ausgestaltung des Schwenklagers 10 der Schwinge 9 näher dargestellt. Dieses Schwenklager 10 der Schwinge 9 ist längsverschiebbar in einem Langloch 17 aufgenommen. Die Schwinge 9 weist ferner einen Anschlag 18 auf, der die Schwenkbewegung der Schwinge 9 begrenzt (siehe Fig. 6a und 6b), indem er nach einer gewissen Schwenkbewegung der Schwinge in Kontakt mit der Konsole 13 oder einer anderen Gegenfläche kommt. Bei einer weiteren Hubbewegung des Betätigungszylinders 12 erfolgt dann eine Verschiebung der Schwinge 9 nebst Schwenklager 10 (siehe Fig. 6b und 6c). Die Verschiebung wird dabei durch die Länge des Langlochs 17 begrenzt. An Stelle des Anschlages 18 und eines Gleitsteines könnten aber auch Rollen eingesetzt werden.

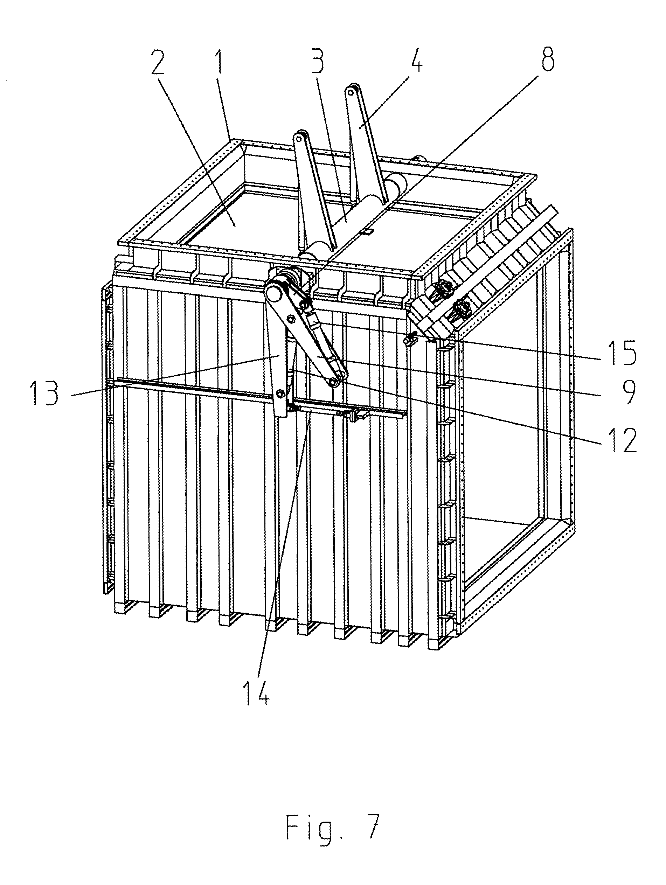

Um den Schwenkbereich der Antriebswelle 3 noch weiter zu steigern, kann das Übertragungselement 11 als zweiter Betätigungszylinder 15 ausgebildet werden, wie dies in den Fig. 7 bis Fig. 9 dargestellt ist.

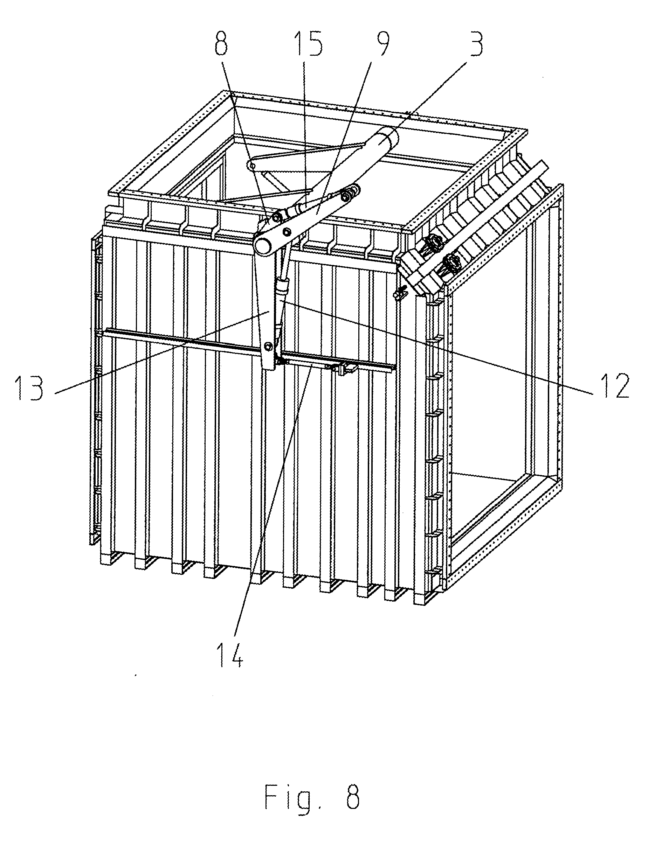

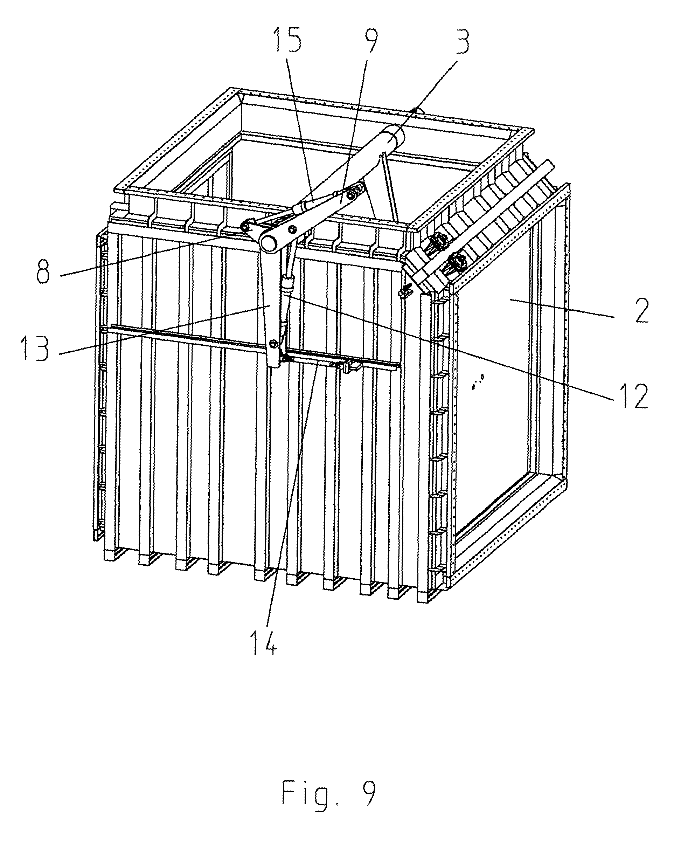

Die beiden Betätigungszylinder 12, 15 sind so aufeinander abgestimmt, dass zunächst der Betätigungszylinder 12 ein Drehen der Schwinge 9 bewirkt, wobei der Hebelarm eine Drehung von etwa 90° ausführt. Erst wenn der Betätigungszylinder 12 voll ausgefahren ist, fährt der zweite Betätigungszylinder 15 von der in Fig. 8 gezeigten Stellung in die der Fig. 9. Der Hebelarm 8 führt dabei nochmals eine Drehung um etwa 90° aus, sodass der gesamte Schwenkbereich des Hebelarms 8 etwa 180° oder mehr beträgt.

Zweckmäßigerweise wird der Betätigungszylinder 12 mit einem größeren wirksamen Kolbendurchmesser als der zweite Betätigungszylinder 15 ausgebildet, wobei beide Betätigungszylinder parallel zueinander angeordnet sind. Auf diese Weise können beide Betätigungszylinder miteinander in Verbindung stehen und gleichzeitig mit dem selben Druck beaufschlagt werden. Dabei ergibt sich aufgrund des größeren wirksamen Kolbendurchmessers des ersten Betätigungszylinders 12 zunächst ein Ausfahren des Betätigungszylinder 12 und erst im Anschluss eine Betätigung des zweiten Betätigungszylinders 15. Der Vorteil dieser Anordnung besteht darin, dass im mittleren Stellbereich die Ausnutzung der Betätigungszylinder aufgrund der Hebelverhältnisse sehr gut ist, was wiederum hohe Stellmomente ergibt. Dies ist bei hohen Strömungsgeschwindigkeiten, also hohen dynamischen Belastungen, besonders vorteilhaft.

Durch diese Ausbildung und Kopplung der beiden Betätigungszylinder 12, 15 ergibt sich wiederum ein sehr einfacher, störungsfreier und betriebssicherer Hydraulikantrieb, wobei auf eine entsprechende Ventilsteuerung verzichtet werden kann.

Wie insbesondere aus den Fig. 1 und Fig. 2 ersichtlich ist, befindet sich die Antriebswelle 3 etwa in der Mitte der Schwenkklappe 2. Dabei liegt der Abstand a zwischen der Schwenkachse 2a der Schwenkklappe 2 und der Drehachse der Antriebswelle 3 im Bereich von 0.3 bis 0.7, vorzugsweise 0.4 bis 0.6 der Breite b der Schwenkklappe 2 (siehe Fig. 1).

## Patentansprüche

1. Absperrsystem für große Leitungsquerschnitte mit einer Schwenkklappe (2), die um eine Schwenkachse (2a) mittels einer Antriebseinrichtung zwischen zwei Endstellungen hin und her schwenkbar ist, wobei die Antriebseinrichtung eine Antriebswelle (3) aufweist, die über ein Kniehebelsystem (4) mit der Schwenkklappe (2) in Verbindung steht und wenigstens ein drehfest mit der Antriebswelle verbundener Hebelarm (8) vorgesehen ist, der mit wenigstens einem Betätigungszylinder (12) zum Drehen der Antriebswelle (3) in Wirkverbindung steht,
**dadurch gekennzeichnet, dass**
a) die Antriebseinrichtung eine um ein Schwenklager (10) drehbeweglich befestigte Schwinge (9) aufweist und der Betätigungszylinder (12) mit der Schwinge (9) zum Schwenken derselben in Verbindung steht und zwischen dem Hebelarm (8) und der Schwinge (9) ein Übertragungselement (11, 15) vorgesehen ist, um die Schwenkbewegung der Schwinge auf die Antriebswelle (3) zu übertragen,
b) und dass das Schwenklager (10) längsverschiebbar ausgebildet ist.

2. Absperrsystem nach Anspruch 1, **dadurch gekennzeichnet, dass** die Antriebseinrichtung so ausgebildet ist, dass die Drehbewegung der Antriebswelle (3) zwischen den beiden Endstellungen der Schwenkklappe (2) wenigstens 160°, insbesondere zwischen 160° und 180°, beträgt.

3. Absperrsystem nach Anspruch 1, **dadurch gekennzeichnet, dass** die Schwenkklappe (2) zwischen den beiden Endstellungen eine Schwenkbewegung von etwa 90° ausführt.

4. Absperrsystem nach Anspruch 1, **dadurch gekennzeichnet, dass** die Schwinge (9) mit ihrem einen Ende drehbeweglich um das Schwenklager (10) gelagert ist und mit ihrem anderen Ende über das Übertragungselement (11, 15) mit dem Hebelarm (8) in Verbindung steht und der Betätigungszylinder (12) in einem Mittelbereich der Schwinge (9) angekoppelt ist.

5. Absperrsystem nach Anspruch 1, **dadurch gekennzeichnet, dass** der Abstand (a) zwischen der Schwenkachse (2a) der Schwenkklappe (2) und der Drehachse der Antriebswelle (3) im Bereich von 0.3 bis 0.7, vorzugsweise 0.4 bis 0.6, der Breite (b) der Schenkklappe (2) beträgt.

6. Absperrsystem nach Anspruch 1, **dadurch gekennzeichnet, dass** das Übertragungselement (11) durch eine Gelenkstange gebildet wird.

7. Absperrsystem nach Anspruch 1, **dadurch gekennzeichnet, dass** die Schwinge (9) ferner einen Anschlag (18) aufweist, der die Schwenkbewegung der Schwinge (9) begrenzt und bei einer weiteren Hubbewegung des Betätigungszylinders (12) eine Verschiebung der Schwinge bewirkt.

8. Absperrsystem nach Anspruch 1, **dadurch gekennzeichnet, dass** das Übertragungselement (11) durch einen zweiten Betätigungszylinder (15) gebildet wird, um den Drehbereich der Antriebswelle (3) zu vergrößern.

9. Absperrsystem nach Anspruch 8, **dadurch gekennzeichnet, dass** der erste Betätigungszylinder (12) einen größeren wirksamen Kolbendurchmesser als der zweite Betätigungszylinder (15) aufweist und die beiden Betätigungszylinder parallel zueinander angeordnet sind.

10. Absperrsystem nach Anspruch 9, **dadurch gekennzeichnet, dass** die beiden Betätigungszylinder (12, 15) derart miteinander in Verbindung stehen, dass beide immer gleichzeitig mit demselben Druck beaufschlagt werden.

11. Absperrsystem nach Anspruch 1, **dadurch gekennzeichnet, dass** der Betätigungszylinder (12) mit seinem einen Ende mit der Schwinge (9) verbunden und mit seinem anderen Ende über ein Gegenlager (16) an einer Konsole (13) abgestützt ist, wobei die Konsole an ihrem eine Ende drehbeweglich gehaltert ist und sich an ihrem anderen Ende an einem Gehäuserahmen abstützt.

12. Absperrsystem nach Anspruch 11, **dadurch gekennzeichnet, dass** im Bereich der Konsole (13) auch das Schwenklager (10) der Schwinge (9) vorgesehen ist.

13. Absperrsystem nach den Ansprüchen 11 und 12, **dadurch gekennzeichnet, dass** sich die Konsole (13) über eine Gelenkstange, einen Stoßdämpfer (14) oder einen Kraftspeicher, insbesondere eine Feder, am Gehäuserahmen abstützt.

## Claims

1. A shut-off system for large conduit cross-sections, having a swing flap (2) which can be swung to and fro between two end positions about a pivot axis (2a) by means of a drive device, wherein the drive device has a drive shaft (3) which is connected to the swing flap (2) *via* an elbow lever system (4), and at least one lever arm (8) rigidly connected to the drive shaft is provided which is in operative connection with at least one operating cylinder (12) for rotation of the drive shaft (3),
**characterised in that**
a) the drive device has a motion link (9) which is fastened so as to be rotatable about a pivot bearing (10), and the operating cylinder (12) is connected to the motion link (9) to pivot the same, and a transmission element (11, 15) is provided between the lever arm (8) and the motion link (9) in order to transmit the pivoting motion of the motion link to the drive shaft (3),
b) and **in that** the pivot bearing (10) is constructed to be longitudinally displaceable.

2. A shut-off system according to claim 1, **characterised in that** the drive device is so constructed that the rotational movement of the drive shaft (3) between the two end positions of the swing flap (2) is at least 160°, especially between 160° and 180°.

3. A shut-off system according to claim 1, **characterised in that** the swing flap (2) executes a pivoting movement between the two end positions of approximately 90°.

4. A shut-off system according to claim 1, **characterised in that** the motion link (9) is supported by its one end to be rotatable about the pivot bearing (10) and is connected by its other end to the lever arm (8) *via* the transmission element (11, 15), and the operating cylinder (12) is coupled to a central region of the motion link (9).

5. A shut-off system according to claim 1, **characterised in that** the distance (a) between the pivot axis (2a) of the swing flap (2) and the rotation axis of the drive shaft (3) is in the range of from 0.3 to 0.7, preferably from 0.4 to 0.6, times the width (b) of the swing flap (2).

6. A shut-off system according to claim 1, **characterised in that** the transmission element (11) is formed by a linkage rod.

7. A shut-off system according to claim 1, **characterised in that** the motion link (9) further has a stop (18) which limits the pivoting movement of the motion link (9) and, as the stroke of the operating cylinder (12) continues, causes displacement of the motion link.

8. A shut-off system according to claim 1, **characterised in that** the transmission element (11) is formed by a second operating cylinder (15) in order to increase the turning range of the drive shaft (3).

9. A shut-off system according to claim 8, **characterised in that** the first operating cylinder (12) has a greater effective piston diameter than the second operating cylinder (15) and the two operating cylinders are arranged parallel to each other.

10. A shut-off system according to claim 9, **characterised in that** the two operating cylinders (12, 15) are connected to each other in such a manner that both of them are always acted upon simultaneously by the same pressure.

11. A shut-off system according to claim 1, **characterised in that** the operating cylinder (12) is connected by its one end to the motion link (9) and is supported by its other end via a end support bearing (16) on a mounting bracket (13), wherein the mounting bracket is held so as to be rotatable at its one end and is supported at its other end on a housing frame.

12. A shut-off system according to claim 1, **characterised in that** the pivot bearing (10) of the motion link (9) is also provided in the region of a mounting bracket (13).

13. A shut-off system according to claim 1, **characterised in that** of the mounting bracket (13) is supported on the housing via a linkage rod, a shock absorber (14) or an energy storing device, especially a spring.

## Revendications

1. Système d'obturation pour de grandes sections de conduites, comprenant un volet pivotant (2) qui, au moyen d'un dispositif d'entraînement, peut pivoter autour d'un axe de pivotement (2a), suivant un mouvement de va-et-vient se produisant entre deux positions de fin de course, où le dispositif d'entraînement présente un arbre d'entraînement (3) qui est en liaison avec le volet pivotant (2) via un système de levier à rotule (4), et il est prévu au moins un bras de levier (8) relié à l'arbre d'entraînement en étant fixe en rotation, bras de levier qui est en liaison active avec au moins un vérin de commande (12) servant à faire tourner l'arbre d'entraînement (3),
**caractérisé en ce que**
a) le dispositif d'entraînement présente une manivelle oscillante (9) fixée en étant mobile en rotation autour d'un palier de pivotement (10), et le vérin de commande (12) est en liaison avec la manivelle oscillante (9) pour la faire pivoter, et il est prévu un élément de transmission (11, 15) placé entre le bras de levier (8) et la manivelle oscillante (9), pour transmettre à l'arbre d'entraînement (3) le mouvement pivotant de la manivelle oscillante,
b) et **en ce que** le palier de pivotement (10) est configuré en pouvant coulisser longitudinalement.

2. Système d'obturation selon la revendication 1, **caractérisé en ce que** le dispositif d'entraînement est conçu de manière telle, que le mouvement de rotation de l'arbre d'entraînement (3), entre les deux positions de fin de course du volet pivotant (2), soit au moins de 160°, en particulier compris entre 160° et 180°.

3. Système d'obturation selon la revendication 1, **caractérisé en ce que** le volet pivotant (2) effectue un mouvement pivotant à peu près égal à 90° entre les deux positions de fin de course.

4. Système d'obturation selon la revendication 1, **caractérisé en ce que** la manivelle oscillante (9), par l'une de ses extrémités, est montée en étant mobile en rotation autour du palier de pivotement (10) et, par son autre extrémité, est en liaison avec le bras de levier (8) via l'élément de transmission (11, 15), et le vérin de commande (12) est accouplé dans une partie centrale de la manivelle oscillante (9).

5. Système d'obturation selon la revendication 1, **caractérisé en ce que** la distance (a) existant entre l'axe de pivotement (2a) du volet pivotant (2), et l'axe de rotation de l'arbre d'entraînement (3), est dans la plage allant de 0,3 fois à 0,7 fois, de préférence de 0,4 fois à 0,6 fois la largeur (b) du volet pivotant (2).

6. Système d'obturation selon la revendication 1, **caractérisé en ce que** l'élément de transmission (11) est formé par une tige articulée.

7. Système d'obturation selon la revendication 1, **caractérisé en ce que** la manivelle oscillante (9) présente en outre une butée (18) qui limite le mouvement pivotant de la manivelle oscillante (9) et, dans le cas d'un autre mouvement ascensionnel du vérin de commande (12), déclenche un déplacement de la manivelle oscillante.

8. Système d'obturation selon la revendication 1, **caractérisé en ce que** l'élément de transmission (11) est formé par un deuxième vérin de commande (15), pour augmenter la zone de rotation de l'arbre d'entraînement (3).

9. Système d'obturation selon la revendication 8, **caractérisé en ce que** le premier vérin de commande (12) présente un diamètre de piston efficace plus grand que celui du deuxième vérin de commande (15), et les deux vérins de commande sont disposés en étant parallèles l'un à l'autre.

10. Système d'obturation selon la revendication 9, **caractérisé en ce que** les deux vérins de commande (12, 15) sont en liaison l'un avec l'autre, de manière telle que les deux vérins de commande soient toujours alimentés, en même temps, par la même pression.

11. Système d'obturation selon la revendication 1, **caractérisé en ce que** le vérin de commande (12), par l'une de ses extrémités, est en liaison avec la manivelle oscillante (9) et, par son autre extrémité, est supporté sur une console (13) par un palier d'appui (16), où la console est fixée en étant mobile en rotation au niveau de l'une de ses extrémités et s'appuie sur un cadre de carter au niveau de son autre extrémité.

12. Système d'obturation selon la revendication 11, **caractérisé en ce qu'**il est prévu également, dans la zone de la console (13), le palier de pivotement (10) de la manivelle oscillante (9).

13. Système d'obturation selon les revendications 11 et 12, **caractérisé en ce que** la console (13) s'appuie sur le cadre de carter, par une tige articulée, un amortisseur (14) ou un accumulateur d'énergie, en particulier un ressort.
